Europäisches Patentamt

European Patent Office

Office européen des brevets

(11) Publication number: **0 084 900**
**B1**

(12) **EUROPEAN PATENT SPECIFICATION**

(45) Date of publication of patent specification: **16.04.86**

(21) Application number: **83200050.9**

(22) Date of filing: **13.01.83**

(51) Int. Cl.⁴: **A 23 D 3/00, C 11 C 3/10**

(54) **Margarine fat blend with a reduced tendency to sandiness and a process for reducing the development of sandiness in fat blends.**

(30) Priority: **20.01.82 GB 8201578**
**12.02.82 NL 8200527**

(43) Date of publication of application:
**03.08.83 Bulletin 83/31**

(45) Publication of the grant of the patent:
**16.04.86 Bulletin 86/16**

(84) Designated Contracting States:
**AT BE CH DE GB IT LI NL SE**

(56) References cited:
**GB-A-1 190 553**
**GB-A-1 244 868**
**GB-A-1 365 302**
**GB-A-1 455 828**

(73) Proprietor: **UNILEVER NV**
**Burgemeester s'Jacobplein 1 P.O. Box 760**
**NL-3000 DK Rotterdam (NL)**
㊤ **BE CH DE IT LI NL SE AT**

(73) Proprietor: **UNILEVER PLC**
**Unilever House Blackfriars P.O. Box 68**
**London EC4P 4BQ (GB)**
㊤ **GB**

(72) Inventor: **Gercama, Anne**
**12, rue des Champs**
**F-78570 Chanteloup les Vignes (FR)**
Inventor: **Schijf, Robert**
**Louise de Colignylaan 23**
**NL-3136 Vlaardingen (NL)**

(74) Representative: **Léon, Alain Elie, Dr. et al**
**Unilever N.V. Patent Division P.O. Box 137**
**NL-3130 AC Vlaardingen (NL)**

Courier Press, Leamington Spa, England.

# 0 084 900

## Description

The present invention relates to a margarine fat blend with a reduced tendency to sandiness. More particularly the invention relates to a margarine fat with a relatively high level of poly-unsaturated fatty acid residues, particularly of the linoleic type, stemming from oils such as sunflower oil, soybean oil, corn oil, rapeseed oil and the like. Preferred fat components are in general those which have a level of linoleic acid residues of at least 40%. In order to get a fat blend having an adequate consistency, by which term is meant that the amount of crystallized solid fat at a temperature ranging from 10 to 20°C should preferably range from 10 to 20%, it is common to hydrogenate at least part of the fat. In order to get a fat blend having the right melting properties on consumption, it is important that the oil is partially hydrogenated, preferably under conditions promoting isomerization, e.g. in the presence of a sulphur-poisoned nickel catalyst precipitated on kieselguhr at a temperature ranging from 140°C to 180°C. Under these conditions fats are obtained which have a relatively high content of trans-fatty acid residues.

These "trans-fats" are appreciated because they impart a certain coolness to the fat, which means that such fats have a rather steep melting curve within the temperature range of 15—25°C. On the other hand these "trans-fats" sometimes cause sandiness.

Sandiness becomes apparent under the microscope in the form of relatively large needles consisting of high-melting fat crystals, the size of which ranges from 10 to 50 micrometers. Moreover, on consumption these fat crystals give an unpleasant sensation on the palate.

The risk of the development of sandiness and particularly the rate of formation of said large crystals can be controlled by processing and storage conditions.

It has been proposed in British Patent 1 121 662 to reduce sandiness in a hardened sunflower oil containing fat blend by interestifying a mixture comprising hardened and unhardened sunflower oil. This interesterified mixture constitutes about 60% of the total blend. This relatively high level of the interesterified component was deemed essential in order to reduce recrystallisation, which is the cause of sandiness.

In later developments it was attempted to lower this high level of the interesterified component while keeping sandiness at a low level. This resulted in fat blends as described in Canadian Patent 1 113 779, which contain 25—50% of an interesterified component obtained from the random interesterification of a low-trans hardened sunflower oil and non-hardened sunflower oil.

In the above patents specifications fat blends are described which have a level of hydrogenated fats higher than 35% and sometimes even higher than 45%, whereby the need for a fat with a high level of linoleic acid is not sufficiently met.

GB 1244868 and GB 1190553 relate to a fat composition comprising a non-randomized liquid fat and a randomized hard fat comprising a fully hydrogenated fat and hard coconut fat or palmkernel fat. Fully hydrogenated fats, as distinct from the partly hydrogenated fats containing trans-fatty acids used in the present invention, do not display sandiness, which is mainly due to trans-unsaturation.

GB 1365302 describes margarine fat blends containing an interesterified mixture from a partly hydrogenated oil and palm fat, which is present at a level which is considerably higher than the levels of palm fat used in the present invention, in relation to the partly hydrogenated oil present. The margarine fat blends may further contain up to 20% but preferably not more than 10% of non-interesterified components. This British patent does not address the sandiness problem but the problem of post-hardening associated with the use of palm oil at relatively high concentrations.

GB 1455828 relates to margarine fat blends comprising a non-interesterified component which may consist of a liquid oil and an interesterified component from a mixture which contains palm oil and a partly hydrogenated oil. Here again the level of palm fat is considerably higher than the level of palm fat used in the present invention. The problem addressed in the British patent is the excessive formation of large grain-like crystal aggregates upon storage, due to the presence of high levels of palm fat.

Applicants have found fat blends and process for producing blends having a low risk of developing sandiness and meeting the long felt need for a physiologically beneficial fat, i.e. a fat with a level of linoleic acid residues preferably higher than about 30%, with good organoleptic properties.

The invention is based on the discovery that sandiness of fats can be reduced by adding to a fat prone to sandiness, an effective amount of a fat rich in palmitic acid residues and by interesterifying the mixture thus obtained.

The process for producing a fat blend with a reduced tendency to sandiness according to the invention comprises more specifically mixing an oil (a) having a level of linoleic acid residues of at least 20% with a hydrogenated fat (b) containing trans-unsaturated fatty acids, having a level of palmitic acid residues of at least 10%, (b) being obtained either by

(i) interesterification of a mixture of oil (a) with a fat (d) selected from the group consisting of palm oil, cottonseed oil, butterfat, tallow fat, herring oil, menhaden oil and fractions thereof in hydrogenated or in non-hydrogenated form, followed by hydrogenation of the interesterified mixture to a melting point ranging from 30—48°C, or by

(ii) interesterification of a mixture of an oil (c) having a melting point ranging from 30 to 48°C with fat (d), the level of fat (d) constituting 1—15% of the total fat blend.

According to a preferred embodiment of the present invention the ratio of (a):(d) ranges from 5:1 to

2

20:1 or, if one starts from a hydrogenated oil (c), the ratio of the proportions of oil (c) to oil (d) will range from 5:1 to 20:1, and the amount of the interesterified component of the fat blend will range from 25—70%, whereas oil (a) constitutes 30—75% of the fat blend.

Details on the various ingredients of the fat blend and the process conditions are described further in the specification.

More specifically the margarine fat blends according to the invention comprise:

30—75% of an oil (a) having a level of linoleic acid residues of at least 20% and

25—70% of a hydrogenated fat (b) containing trans-unsaturated fatty acids, having a level of palmitic acid residues of at least 10%, (b) being obtained either by:

(i) interesterification of a mixture of oil (a) with a fat (d) selected from the group consisting of palm oil, cottonseed oil, butterfat, tallow fat, herring oil, menhaden oil and fractions thereof in non-hydrogenated or in hydrogenated form, followed by hydrogenation of the interesterified mixture to a melting point ranging from 30—48°C or

(ii) interesterification of a mixture of an oil (c) having a melting point ranging from 30—48°C with fat (d), the level of fat (d) constituting 1—15% of the total fat blend.

Oil (a) preferably comprises sunflower oil, safflower oil, soybean oil, corn oil, rapeseed oil or mixtures thereof.

Fat (c) preferably comprises an oil (a) which has been hydrogenated to a melting point ranging from 30—48°C, preferably under conditions promoting isomerisation conducive to trans-unsaturated acids, e.g. using a sulphur-poisoned nickel catalyst at a temperature ranging from 140—180°C. An appropriate proportion of this component is used to achieve in the final blend a level of trans-acids preferably ranging from 15—30%, ideally from 15—20% (measured according to A.O.C.S. Tentative Method Cd 14—61).

Fat (d) has a level of palmitic acid residues preferably ranging from 50—90% and preferably consists of a stearin fraction obtained by fractionation of palm oil, preferably in the presence of a solvent and ideally in the presence of acetone at 18—24°C using a solvent:oil ratio of 4:1—5:1.

It is however also possible to produce a stearin fraction by dry-fractionation of palm oil (in the absence of a solvent) or in the presence of an aqueous solution of a surface-active agent such as sodiumlauryl-sulphate (so-called Lanza-fractionation).

Fat (a) and fat (c) preferably originate from the same source. Fat (a) preferably consists of sunflower oil and fat (c) preferably consists of sunflower oil hydrogenated to a melting point preferably ranging from 34—43°C, because of the good melting properties resulting therefrom.

Interesterification may involve random interesterification and directed interesterification, which means an interesterification combined with a crystallization of the high melting triglycerides present in the mixture, which can subsequently be filtered off.

Preferably, random interesterification is carried out under substantially moisture-free conditions (0.01% water) under vacuum, using a classical catalyst such as an alkalimetal alkoxide, an alkali metal such as sodium, or dry sodium hydroxide.

Oil (a) is preferably present in a proportion ranging from 30—75%, more preferably from 60—75%. Oil (a) preferably consists of sunflower oil having a level of linoleic acid residues of 60—70%.

The interesterified fat (b) can be present in an amount up to 70%, but preferably within the range of 25—40% by weight.

Fat (b) is preferably obtained by interesterification of a mixture of fats (c) and (d), wherein the ratio of fat (c) to fat (d) preferably ranges from 14:1 to 7:1. Fat (d) preferably constitutes 2—8% of the total blend, whereas the remainder of the fat stems from hydrogenated and non-hydrogenated oil (a).

The preferred fat blend according to the present invention will contain a level of linoleic acid residues ranging from 30—55% and preferably from 40—48%.

The fat blend according to the invention does not display sandiness on storage at 20°C for a period of five weeks or longer.

The fat blend according to the invention can be used as a component of margarines.

The above description and examples were focussed on fat blends essentially consisting of components (a) and (b) as hereinbefore defined. It goes without saying that fat blends can be produced which comprise a minor proportion, preferably less than 10%, of an additional fat component which was not subjected to interesterification, such as a hydrogenated oil, e.g. palmkernel oil hydrogenated to a melting point of 38°C.

The invention will now be illustrated in the following Examples:

Example 1

A fat blend was produced starting from 67% of sunflower oil, 33% of a randomly interesterified blend consisting of 91% of sunflower oil hardened to a melting point of 34°C and 9% of acetone-fractionated palm oil stearin.

Interesterification was carried out using a catalyst consisting of a 30 wt.% dispersion of sodium in oil. A proportion of 0.15 wt.%, based on the fat, of this dispersion was used. Interesterification was carried out for half an hour under nitrogen. The reaction was stopped with 2 wt.% of water, based on the fat, and soap which had been found was removed by adding 2 wt.% of bleaching earth. The mixture was filtered over a hyflo filter aid.

Hydrogenation was carried out using 0.3 wt% of a sulphur-poisoned nickel catalyst (5.5 g S/100 g Ni).

Hydrogenation of sunflower oil was carried out in two steps, firstly at 150°C and subsequently at 180°C, to achieve a melting point of 34°C.

Fractionation of palm oil was carried out, using dry acetone at 18—24°C. The solvent:fat ratio was 4:1.

The level of palmitic acid residues in the interesterified blend was 13.8%.

The level of palmitic acid residues in the palm oil stearin obtained by acetone fractionation was 83.6%.

The level of trans-fatty acids in the total fat blend was about 19.5%.

The level of linoleic acid residues in the total fat blend was 46.4%.

The solid fat content at various temperatures obtained by nuclear magnetic resonance measurements were

$$N_{10}=24.7$$
$$N_{20}=13.1$$
$$N_{30}= 2.7$$
$$N_{35}= 0$$

The measurements were carried out essentially as described in "Fette, Seifen, Anstrichmittel" *80*, 180—186 (1978).

A margarine was produced, starting from the above fat blend and an aqueous phase containing 16% of water, 0.27% of skim milk powder, 0.5% of starch, 0.3% of sodium chloride and 0.07% of potassium sorbate, pH=4.5. The fat phase (82.86%) contained 82.74% of the fat blend, 0.05% of a monoglyceride and 0.07% of lecithin.

The margerine was produced on a Votator®.

The product obtained was stored for 9 weeks at 20°C. On consumption no sandiness was perceived. Examination of the product under the microscope did not reveal a substantial amount of needles of crystallized fat, which means that the fat had a low risk of developing sandiness on further storage.

Example 2

The general procedure of Example 1 was repeated, with the difference that the fat blend consisted of 70% of sunflower oil and 30% of a randomly interesterified blend consisting of 91% of sunflower oil hardened to a melting point of 37°C and 9% of the acetone-fractionated palm oil stearin.

The level of palmitic acid residues in the interesterified mixture was 13.4%.

The level of trans-fatty acids in the total fat blend was about 18.6%.

The level of linoleic acid residues in the total fat blend was 47.1%.

The solid fat contents at various temperatures were:

$$N_{10}=24.8$$
$$N_{20}=13.9$$
$$N_{30}= 3.4$$
$$N_{35}= 0$$

Microscopic examination of a margarine produced with this fat blend, according to the procedure outlined in Example 1, revealed no sandiness after a storage period of 9 weeks at 20°C. On consumption the margarine was as good as the product of Example 1.

Example 3

The general procedure of Example 1 was repeated with the following fat blend:

74% of sunflower oil and 26% of a randomly interesterified blend consisting of 91% of sunflower oil hardened to a melting point of 39°C and 9% of acetone-fractionated palm oil stearin.

The level of palmitic acid residues in the interesterified blend was 13.4.

The level of trans-fatty acids in the total fat blend was 13.7.

The level of linoleic acid residues in the total fat blend was 51%.

The solid fat contents at various temperatures were:

$$N_{10}=22.7$$
$$N_{20}=13.0$$
$$N_{30}= 4.0$$
$$N_{35}= 0.7$$

Microscopic examination of a margarine produced with this fat blend, according to the procedure outlined in Example 1, revealed no sandiness after a storage period of 9 weeks at 20°C. On consumption the margarine was as good as the product of Example 1.

Example 4

The general procedure of Example 1 was repeated with the following fat blend:

69% of sunflower oil,

31% of an interesterified fat blend consisting of 91% of sunflower oil and 9% of acetone-fractionated palm oil stearin.

The interesterified blend was hydrogenated as a whole to a melting point of 37°C.

The palmitic acid content of the interesterified blend was 12.7%.

The level of trans-fatty acids in the total fat blend was 17.1%.

The level of linoleic acid residues in the total fat blend was 48.2%.

The solid fat contents at various temperatures were:

$$N_{10}=24.9$$
$$N_{20}=13.5$$
$$N_{30}=3.5$$
$$N_{35}=0$$

Microscopic examination of a margarine produced with this fat blend, according to the procedure outlined in Example 1, revealed no sandiness after a storage period of 9 weeks at 20°C. On consumption the margarine was as good as the product of Example 1.

Examples 5—7

Three fat blends were produced according to the procedure outlined in Example 1. All three blends comprised 70% of sunflower oil and 30% of various interesterified mixtures.

In Example 5 the interesterified mixture consisted of 90% of rapeseed oil hydrogenated to 43°C and 10% of the above-mentioned stearin fraction.

In Example 6 the interesterified mixture consisted of 95% of soybean oil hydrogenated to a m.p. of 41°C and 5% of the above-mentioned stearin fraction.

In Example 7 the interesterified mixture consisted of 95% of corn oil hydrogenated to 35°C and 5% of the above-mentioned stearin fraction.

Microscopic examination of margarines produced from the above fat blends revealed no sandiness after a storage period of 5 weeks at 20°C.

The level of trans-fatty acids, the level of linoleic acid in the fat blends and the palmitic acid content in the interesterified mixtures of Examples 5—7 were as follows:

| Example | Level of trans-fatty acids | Level of linoleic acid | Level of palmitic acid in interest. mixt. |
|---------|---------|---------|---------|
| 5 | 15% | 46% | 13.2% |
| 6 | 21% | 46% | 15.2% |
| 7 | 21% | 46% | 14.1% |

Examples 8 and 9

Two fat blends were produced from 70% of sunflower oil and 30% of a randomly interesterified mixture.

In Example 8 the interesterified mixture consisted of 40% of cottonseed oil (m.p. 37°C) and 60% of sunflower oil (m.p. 41°C).

In Example 9 the interesterified mixture consisted of 20% of hydrogenated palm oil (m.p. 44°C) and 80% of sunflower oil (m.p. 41°C).

Microscopic examination of margarines produced from the above fat blends revealed no sandiness after a storage period of 5 weeks at 20°C.

The level of trans-fatty acids, the level of linoleic acid in the fat blends and of the palmitic acid residues in the interesterified mixtures of Examples 8—9 were as follows:

| Example | Level of trans-fatty acids | Level of linoleic acid | Level of palmitic acid in interest. mixt. |
|---------|---------|---------|---------|
| 8 | 19% | 46% | 12.9% |
| 9 | 19% | 46% | 14.3% |

Example 10

A fat blend was produced from 45% of sunflower oil and 55% of a randomly interesterified mixture of 90% sunflower oil (m.p. 41°C) and 10% of the stearin fraction obtained by acetone fractionation of palm oil (Ex. 1).

# 0 084 900

Microscopic examination of margarines produced from the above fat blend revealed no sandiness after a storage period of 5 weeks at 20°C.

The level of trans-fatty acids in the fat blend was 34%, the level of linoleic acid was 30%.

## Claims for the Contracting States: BE, CH, DE, GB, IT, LI, NL, SE

1. A margarine fat blend with a reduced tendency to sandiness, comprising an oil (a) having a level of linoleic acid residues of at least 20% and a hydrogenated fat (b) containing trans-unsaturated fatty acids, having a level of palmitic acid residues of at least 10%, (b) being obtained either by

(i) interesterication of a mixture of oil (a) with a fat (d) selected from the group consisting of palm oil, cottonseed oil, butterfat, tallow fat, herring oil, menhaden oil and fractions thereof in hydrogenated or in non-hydrogenated form, followed by hydrogenation of the interesterified mixture to a melting point ranging from 30—48°C, or by

(ii) interesterification of a mixture of an oil (c) having a melting point ranging from 30 to 48°C with fat (d), the level of fat (d) constituting 1—15% of the total fat blend.

2. A margarine fat blend according to Claim 1, wherein oil (a) constitutes 30—75% and fat (b) constitutes 25—70% of the total fat blend.

3. A margarine fat blend according to Claim 1, wherein the ratio (a):(d) or the ratio (c):(d) ranges from 5:1 to 20:1.

4. A margarine fat blend according to Claim 3, wherein the ratio (a):(d) or the ratio (c):(d) ranges from 7:1 to 14:1.

5. A margarine fat blend according to Claim 1, wherein oil (a) comprises sunflower oil, safflower oil, soybean oil, corn oil, rapeseed oil or mixtures thereof.

6. A margarine fat blend according to Claim 1, wherein fat (c) comprises sunflower oil, safflower oil, soybean oil, corn oil, rapeseed oil or mixtures thereof, hydrogenated to a melting point ranging from 30—48°C, under conditions promoting isomerism.

7. A margarine fat blend according to Claim 6, wherein which fat (c) consists of sunflower oil hydrogenated to a melting point ranging from 34—43°C and fat (a) consists of sunflower oil.

8. A margarine fat blend according to Claim 6, wherein the level of trans-fatty acids ranges from 15—30%.

9. A margarine fat blend according to Claim 1, wherein the level of linoleic acid residues ranges from 30—55%.

10. A margarine fat blend according to Claim 9, wherein the level of linoleic acid residues ranges from 40—48%.

11. A margarine fat blend according to Claim 1, wherein fat (d) has a level of palmitic acid residues ranging from 50—90%.

12. A margarine fat blend according to Claim 11, wherein fat (d) is the stearin fraction obtained by fractionation of palm oil.

13. A margarine fat blend according to Claim 12, wherein the palm stearin fraction has been obtained by fractionation of palm oil in the presence of a solvent.

14. A margarine fat blend according to Claim 13, wherein the palm stearin fraction is a fraction obtained by fractionation in the presence of acetone at a temperature ranging from 18—24°C.

15. A margarine fat blend according to claim 1, wherein oil (a) is present in a proportion ranging from 60—75% and fat (b) is present in a proportion ranging from 25—40%.

16. A margarine fat blend according to Claim 1, wherein fat (d) constitutes 2—8% of the total blend, whereas the remainder of the fat stems from hydrogenated and non-hydrogenated oil (a).

17. A process for producing a fat blend with a reduced tendency to sandiness, comprising mixing an oil (a) having a level of linoleic acid residues of at least 20% with a mixture of triglycerides obtained either by:

(i) interesterification of a mixture of oil (a) with a fat (d), selected from the group consisting of palm oil, cottonseed oil, butterfat, tallow fat, herring oil, menhaden oil and fractions thereof, in non-hydrogenated or hydrogenated form, followed by hydrogenation of the interesterified mixture to a melting point ranging from 30—48°C or

(ii) interesterification of a mixture of an oil (c) having a melting point ranging from 30—48°C with fat (d), the level of fat (d) constituting 1—15% of the total fat blend.

18. A process according to Claim 17, wherein fat (c) consists of an oil which has been hydrogenated under conditions promoting isomerism.

19. A process according to Claim 18, comprising using an oil (c) consisting of sunflower oil, safflower oil, soybean oil, corn oil, rapeseed oil or a mixture thereof, which has been hydrogenated to a melting point ranging from 30—48°C, at a temperature ranging from 140—180°C, using a sulphur-poisoned nickel catalyst.

20. A process according to Claim 17, comprising using a proportion of fat (d) such that the level of palmitic acid residues in the interesterified mixture is at least 10%.

21. A process according to Claim 20, wherein a fat (d) is used having a level of palmitic acid residues ranging from 50—90%.

6

22. A process according to Claim 21, wherein fat (d) is obtained by fractionating palm oil in the presence of acetone at 18—24°C and isolating the stearin fraction.

23. Margarines, incorporating a margarine fat as claimed in any one of the preceding Claims 1—16.

## Claims for the Contracting State: AT

1. A process for producing a margarine fat blend with a reduced tendency to sandiness, comprising mixing an oil (a) having a level of linoleic acid residues of at least 20% with a hydrogenated fat (b) containing trans-unsaturated fatty acids, having a level of palmitic acid residues of at least 10%, (b) being obtained either:

(i) by interesterification of a mixture of an oil (a) with a fat (d) selected from the group consisting of palm oil, cottonseed oil, butterfat, tallow fat, herring oil, menhaden oil and fractions thereof, in non-hydrogenated or in hydrogenated form, followed by hydrogenation of the interesterified mixture to a melting point ranging from 30—48°C, or

(ii) by interesterification of a mixture of an oil (c) having a melting point ranging from 30—48°C, with fat (d), the level of fat (d) constituting 1—15% of the total fat blend.

2. A process according to Claim 1, wherein oil (a) constitutes 30—75% and fat (b) constitutes 25—70% of the total fat blend.

3. A process according to Claim 1, wherein the ratio (a):(d) or the ratio (c):(d) ranges from 5:1 to 20:1.

4. A process according to Claim 3, wherein the ratio (a):(d) or the ratio (c):(d) ranges from 7:1 to 14:1.

5. A process according to Claim 1, wherein oil (a) comprises sunflower oil, safflower oil, soybean oil, corn oil, rapeseed oil or mixtures thereof.

6. A process according to Claim 1, wherein fat (c) comprises sunflower oil, safflower oil, soybean oil, corn oil, rapeseed oil or mixtures thereof, hydrogenated to a melting point ranging from 30—48°C, under conditions promoting isomerism.

7. A process according to Claim 6, wherein which fat (c) consists of sunflower oil hydrogenated to a melting point ranging from 34—43°C and fat (a) consists of sunflower oil.

8. A process according to Claim 6, wherein the level of trans-fatty acids ranges from 15—30%.

9. A process according to Claim 1, wherein the level of linoleic acid residues ranges from 30—55%.

10. A process according to Claim 9, wherein the level of linoleic acid residues ranges from 40—48%.

11. A process according to Claim 1, wherein fat (d) has a level of palmitic acid residues ranging from 50—90%.

12. A process according to Claim 11, wherein fat (d) is the stearin fraction obtained by fractionation of palm oil.

13. A process according to Claim 12, wherein the palm stearin fraction has been obtained by fractionation of palm oil in the presence of a solvent.

14. A process according to Claim 13, wherein the palm stearin fraction is a fraction obtained by fractionation in the presence of acetone at a temperature ranging from 18—24°C.

15. A process according to Claim 1, wherein oil (a) is present in a proportion ranging from 60—75% and fat (b) is present in a proportion ranging from 25—40%.

16. A process according to Claim 1, wherein fat (d) constitutes 2—8% of the total blend, whereas the remainder of the fat stems from hydrogenated and non-hydrogenated oil (a).

17. A process according to Claim 1, wherein an oil (c) is used which consists of sunflower oil, safflower oil, soybean oil, corn oil, rapeseed oil or a mixture thereof, which has been hydrogenated to a melting point ranging from 30—48°C, at a temperature ranging from 140—180°C, using a sulphur-poisoned nickel catalyst.

18. A process according to Claim 1, wherein fat (d) is obtained by fractionating palm oil in the presence of acetone at 18—24°C and isolating the stearin fraction.

19. A process for producing a margarine, wherein a margarine fat produced according to any one of the preceding Claims 1—18 is used in the fat phase.

## Patentansprüche für die Vertragsstaaten: BE, CH, DE, GB, IT, LI, NL, SE

1. Margarine-Fettgemisch mit reduzierter Neigung zur Entwicklung eines Materials mit sandiger Konsistenz, gekennzeichnet durch ein Öl (a) mit einem Gehalt an Linolsäureresten von wenigstens 20%, und ein hydriertes Fett (b), enthalend trans-ungesättigte Fettsäuren mit einem Gehalt an Palmitinsäureresten von wenigstens 10%, wobei das Fett (b) erhalten wird entweder durch

(i) Umesterung eines Gemisches des Öls (a) mit einem Fett (d), ausgewählt aus der Gruppe, bestehend aus Palmöl, Baumwollsamenöl, Butterfett, Talgfett, Heringsöl, Menhaden-Öl und Fraktionen davon in hydrierter oder nichthydrierter Form, anschließender Hydrierung des umgeesterten Gemisches bis zu einem Schmelzpunkt im Bereich von 30 bis 48°C, oder durch

(ii) Umesterung eines Gemisches eines Öls (c) mit einem Schmelzpunkt im Bereich von 30 bis 48°C mit einem Fett (d), wobei der Gehalt an Fett (d) 1 bis 15% des Gesamtfettgemisches ausmacht.

2. Margarine-Fettgemisch nach Anspruch 1, dadurch gekennzeichnet, daß das Öl (a) 30 bis 75% und des Fett (b) 25 bis 70% des Gesamtfettgemisches ausmachen.

3. Margarine-Fettgemisch nach Anspruch 1, dadurch gekennzeichnet, daß das Verhältnis von (a):(d) bzw. das Verhältnis von (c):(d) bei 5:1 bis 20:1 liegt.

4. Margarine-Fettgemisch nach Anspruch 3, dadurch gekennzeichnet, daß das Verhältnis (a):(d) bzw. das Verhältnis von (c):(d) bei 7:1 bis 14:1 liegt.

5. Margarine-Fettgemisch nach Anspruch 1, dadurch gekennzeichnet, daß das Öl (a) Sonnenblumenöl, Safloröl, Sojabohnenöl, Maisöl, Rapssamenöl oder Mischungen davon umfaßt.

6. Margarine-Fettgemisch nach Anspruch 1, dadurch gekennzeichnet, daß das Fett (c) Sonnenblumenöl, Safloröl, Sojabohnenöl, Maisöl, Rapssamenöl oder Mischungen davon umfaßt, hydriert bis zu einem Schmelzpunkt im Bereich von 30 bis 48°C unter Bedingungen, die eine Isomerisierung fördern.

7. Margarine-Fettgemisch nach Anspruch 6, dadurch gekennzeichnet, daß das Fett (c) aus Sonnenblumenöl, hydriert bis zu einem Schmelzpunkt im Bereich von 34 bis 43°C, und das Fett (a) aus Sonnenblumenöl besteht.

8. Margarine-Fettgemisch nach Anspruch 6, dadurch gekennzeichnet, daß der Gehalt an trans-Fettsäuren im Bereich von 15 bis 30% liegt.

9. Margarine-Fettgemisch nach Anspruch 1, dadurch gekennzeichnet, daß der Gehalt an Linolsäureresten im Bereich von 30 bis 55% liegt.

10. Margarine-Fettgemisch nach Anspruch 9, dadurch gekennzeichnet, daß der Gehalt an Linolsäureresten im Bereich von 40 bis 48% liegt.

11. Margarine-Fettgemisch nach Anspruch 1, dadurch gekennzeichnet, daß das Fett (d) einen Gehalt an Palmitinsäureresten im Bereich von 50 bis 90% aufweist.

12. Margarine-Fettgemisch nach Anspruch 11, dadurch gekennzeichnet, daß das Fett (d) eine Stearinfraktion ist, die erhalten wurde durch Fraktionierung von Palmöl.

13. Margarine-Fettgemisch nach Anspruch 12, dadurch gekennzeichnet, daß die Palmöl-Stearinfraktion erhalten wurde durch Fraktionierung von Palmöl in Gegenwart eines Lösungsmittels.

14. Margarine-Fettgemisch nach Anspruch 13, dadurch gekennzeichnet, daß die Palmöl-Stearinfraktion eine Fraktion ist, die erhalten wurde durch Fraktionierung in Gegenwart von Aceton bei einer Temperatur im Bereich von 18 bis 24°C.

15. Margarine-Fettgemisch nach Anspruch 1, dadurch gekennzeichnet, daß das Öl (a) vorliegt in einem Anteil von 60 bis 75% und das Fett (b) in einem Anteil von 25 bis 40%.

16. Margarine-Fettgemische nach Anspruch 1, dadurch gekennzeichnet, daß das Fett (d) 2 bis 8% des Gesamtgemisches ausmacht, wobei der Rest des Fetts aus einem hydrierten oder nichthydrierten Öl (a) stammt.

17. Verfahren zur Herstellung eines Fettgemisches mit verringerter Neigung zur Entwicklung eines Materials mit sandiger Konsistenz, gekennzeichnet durch Vermischen eines Öls (a) mit einem Gehalt an Linolsäureresten von wenigstens 20% mit einem Gemisch en Triglyceriden, die erhalten wurden entweder durch:

(i) Umesterung eines Gemisches des Öls (a) mit einem Fett (d), ausgewählt aus der Gruppe, bestehend aus Palmöl, Baumwollsamenöl, Butterfett, Talgfett, Heringsöl, Menhaden-Öl und Fraktionen davon, in nichthydrierter oder hydrierter Form, anschließender Hydrierung des umgesterten Gemisches bis zu einem Schmelzpunkt von 30 bis 48°C, oder durch

(ii) Umesterung eines Gemisches eines Öls (c) mit einem Schmelzpunkt im Bereich von 30 bis 48°C mit dem Fett (d), wobei der Gehalt an Fett (d) 1 bis 15% des Gesamtfettgemisches ausmacht.

18. Verfahren nach Anspruch 17, dadurch gekennzeichnet, daß das Fett (c) aus einem Öl besteht, das hydriert wurde unter Bedingungen, die die Isomerisierung fördern.

19. Verfahren nach Anspruch 18, dadurch gekennzeichnet, daß man ein Öl (c) verwendet, bestehend aus Sonnenblumenöl, Safloröl, Sojabohnenöl, Maisöl, Rapssamenöl oder einer Mischung davon, welches hydriert worden ist bis zu einem Schmelzpunkt von 30 bis 48°C bie einer Temperatur von 140 bis 180°C unter Verwendung eines mit Schwefel vergifteten Nickelkatalysators.

20. Verfahren nach Anspruch 17, gekennzeichnet durch die Verwendung eines solchen Anteils an Fett (d), daß der Gehalt an Palmitinsäureresten in dem ungeesterten Gemisch bei wenigstens 10% liegt.

21. Verfahren nach Anspruch 20, dadurch gekennzeichnet, daß ein Fett (d) verwendet wird mit einem Gehalt an Palmitinsäureresten im Bereich von 50 bis 90%.

22. Verfahren nach Anspruch 21, dadurch gekennzeichnet, daß das Fett (d) erhalten wurde durch Fraktionierung von Palmöl in Gegenwart von Aceton bei 18 bis 24°C und Isolierung der Stearinfraktion.

23. Margarinen, enthaltend ein Margarinefett gemäß einem der vorhergehenden Ansprüche 1 bis 16.

**Patentansprüche für den Vertragsstaat: AT**

1. Verfahren zur Herstellung eines Margarine-Fettgemisches mit verringerter Neigung zur Bildung eines Materials mit sandiger Konsistenz, gekennzeichnet durch Vermischen eines Öls (a) mit einem Gehalt an Linolsäureresten von wenigstens 20% mit einem hydrierten Fett (b), enthaltend trans-ungesättigte Fettsäuren, mit einem Gehalt an Palmitinsäureresten von wenigstens 10%, wobei das Fett (b) erhalten wurde entweder durch:

(i) Umesterung eines Gemisches des Öls (a) mit einem Fett (d), ausgewählt aus der Gruppe, bestehend aus Palmöl, Baumwollsamenöl, Butterfett, Talgfett, Heringsöl, Menhaden-Öl und Fraktionen davon, in nichthydrierter oder hydrierter Form, anschließender Hydrierung des umgeesterten Gemisches bis zu einem Schmelzpunkt von 30 bis 48°C, oder durch

(ii) Umesterung eines Gemisches eines Öls (c) mit einem Schmelzpunkt im Bereich von 30 bis 48°C mit dem Fett (d), wobei der Gehalt an Fett (d) 1 bis 15% des Gesamtfettgemisches ausmacht.

2. Verfahren nach Anspruch 1, dadurch gekennzeichnet, daß das Öl (a) 30 bis 75% und das Fett (b) 25 bis 70% des Gesamtfettgemisches ausmachen.

3. Verfahren nach Anspruch 1, dadurch gekennzeichnet, daß das Verhältnis von (a):(d) oder das Verhältnis von (c):(d) bei 5:1 bis 20:1 liegt.

4. Verfahren nach Anspruch 3, dadurch gekennzeichnet, daß das Verhältnis von (a):(d) oder das Verhältnis von (c):(d) bei 7:1 bis 14:1 liegt.

5. Verfahren nach Anspruch 1, dadurch gekennzeichnet, daß das Öl (a) Sonnenblumenöl, Safloröl, Sojabohnenöl, Maisöl, Rapssamenöl oder Mischungen davon umfaßt.

6. Verfahren nach Anspruch 1, dadurch gekennzeichnet, daß das Fett (c) Sonnenblumenöl, Safloröl, Sojabohnenöl, Maisöl, Rapssamenöl oder Mischungen davon umfaßt, hydriert bis zu einem Schmelzpunkt im Bereich von 30 bis 48°C unter Bedingungen, die eine Isomerisierung fördern.

7. Verfahren nach Anspruch 6, dadurch gekennzeichnet, daß das Fett (c) aus Sonnenblumenöl, hydriert bis zu einem Schmelzpunkt im Bereich von 34 bis 43°C, und das Fett (a) aus Sonnenblumenöl besteht.

8. Verfahren nach Anspruch 6, dadurch gekennzeichnet, daß der Gehalt an trans-Fettsäuren im Bereich von 15 bis 30% liegt.

9. Verfahren nach Anspruch 1, dadurch gekennzeichnet, daß der Gehalt an Linolsäureresten im Bereich von 30 bis 55% liegt.

10. Verfahren nach Anspruch 9, dadurch gekennzeichnet, daß der Gehalt an Linolsäureresten im Bereich von 40 bis 48% liegt.

11. Verfahren nach Anspruch 1, dadurch gekennzeichnet, daß das Fett (d) einen Gehalt an Palmitinsäureresten im Bereich von 50 bis 90% aufweist.

12. Verfahren nach Anspruch 11, dadurch gekennzeichnet, daß das Fett (d) eine Stearinfraktion ist, die erhalten wurde durch Fraktionierung von Palmöl.

13. Verfahren nach Anspruch 12, dadurch gekennzeichnet, daß die Palmöl-Stearinfraktion erhalten wurde durch Fraktionierung von Palmöl in Gegenwart eines Lösungsmittels.

14. Verfahren nach Anspruch 13, dadurch gekennzeichnet, daß die Palmöl-Stearinfraktion eine Fraktion ist, die erhalten wurde durch Fraktionierung in Gegenwart von Aceton bei einer Temperatur im Bereich von 18 bis 24°C.

15. Verfahren nach Anspruch 1, dadurch gekennzeichnet, daß das Öl (a) vorliegt in einem Anteil von 60 bis 75% und das Fett (b) in einem Anteil von 25 bis 40%.

16. Verfahren nach Anspruch 1, dadurch gekennzeichnet, daß das Fett (d) 2 bis 8% des Gesamtgemisches ausmacht, wobei der Rest des Fetts aus einem hydrierten oder nichthydrierten Öl (a) stammt.

17. Verfahren nach Anspruch 1, dadurch gekennzeichnet, daß man ein Öl (c) verwendet, das aus Sonnenblumenöl, Safloröl, Sojabohnenöl, Maisöl, Rapssamenöl oder einer Mischung davon besteht, das hydriert worden ist bis zu einem Schmelzpunkt von 30 bis 48°C bei einer Temperatur von 140 bis 180°C unter Verwendung eines mit Schwefel vergifteten Nickelkatalysators.

18. Verfahren nach Anspruch 1, dadurch gekennzeichnet, daß man ein Fett (d) verwendet, das erhalten wurde durch Fraktionierung von Palmöl in Gegenwart von Aceton bei 18 bis 24°C und Isolierung der Stearinfraktion.

19. Verfahren zur Herstellung einer Margarine, dadurch gekennzeichnet, daß man ein Margarinefett, hergestellt nach einem der vorhergehenden Ansprüche 1 bis 18, in der Fettphase verwendet.

**Revendications pour les Etats Contractants: BE, CH, DE, GB, IT, LI, NL, SE**

1. Mélange gras pour margarine à une tendance réduite à la pulvérulence comprenant une huile (a) ayant un niveau de résidus acid linoléique d'au moins 20% et une matière grasse hydrogénée (b) contenant des acides gras trans-insaturés, ayant un niveau de résidus acide palmitique d'au moins 10%, (b) étant obtenu soit

(i) par interestérification d'un mélange d'huile (a) avec une matière grasse (d) choisie dans le groupe constitué par l'huile de palme, l'huile de coton, la graisse de beurre, la graisse de suif, l'huile de hareng, l'huile de menhaden et leurs fractions sous forme hydrogénée ou non hydrogénée, suivie de l'hydrogénation du mélange interestérifié jusqu'à un point de fusion de 30 à 48°C, ou

(ii) par interestérification d'un mélange d'une huile (c) avant un point de fusion de 30 à 48°C avec la matière grasse (d), la concentration en matière grasse (d) constituant 1 à 15% du mélange gras total.

2. Mélange gras pour margarine selon la revendication 1, dans lequel l'huile (a) constitue 30 à 75% et la matière grasse (b) constitue 25 à 70% du mélange gras total.

3. Mélange gras pour margarine selon la revendication 1, dans lequel le rapport (a):(d) ou le rapport (c):(d) est compris entre 5:1 et 20:1.

4. Mélange gras pour margarine selon la revendication 3, dans lequel le rapport (a):(d) ou le rapport (c):(d) est compris entre 7:1 et 14:1.

5. Mélange gras pour margarine selon la revendication 1, dans lequel l'huile (a) comprend de l'huile de

**0 084 900**

tournesol, de l'huile de carthame, de l'huile de soja, de l'huile de maïs, de l'huile de colza ou leurs mélanges.

6. Mélange gras pour margarine selon la revendication 1, dans lequel la matière grasse (c) comprend de l'huile de tournesol, de l'huile de carthame, de l'huile de soja, de l'huile de maïs, de l'huile de colza ou leurs mélanges, hydrogénée jusqu'à un point de fusion de 30 à 48°C, dans des conditions favorisant l'isomérisation.

7. Mélange gras pour margarine selon la revendication 6, dans lequel la matière grasse (c) est constituée par de l'huile de tournesol hydrogénée jusqu'à un point de fusion de 34 à 43°C et la matière grasse (a) est constituée par de l'huile de tournesol.

8. Mélange gras pour margarine selon la revendication 6, dans lequel le niveau d'acides gras trans va de 15 à 30%.

9. Mélange gras pour margarine selon la revendication 1, dans lequel le niveau de résidue acide linoléique va de 30 à 55%.

10. Mélange gras pour margarine selon la revendication 9, dans lequel le niveau de résidus acide linoléique va de 40 à 48%.

11. Mélange gras pour margarine selon la revendication 1, dans lequel la matière grasse (d) a un niveau de résidue acide palmitique allant de 50 à 90%.

12. Mélange gras pour margarine selon la revendication 11, dans lequel la matière grasse (d) est la fraction stéarine obtenue par fractionnement de l'huile de palme.

13. Mélange gras pour margarine selon la revendication 12, dans lequel la fraction stéarine de l'huile de palme a été obtenue par fractionnement de l'huile de palme en présence d'un solvant.

14. Mélange gras pour margarine selon la revendication 13, dans lequel la fraction stéarine de l'huile de palme est une fraction obtenue par fractionnement en présence d'acétone à une température allant de 18 à 24°C.

15. Mélange gras pour margarine selon la revendication 1, dans lequel l'huile (a) est présente en proportion allant de 60 à 75% et la matière grasse (b) est présente en proportion allant de 25 à 40%.

16. Mélange gras pour margarine selon la revendication 1, dans lequel la matière grasse (d) constitue 2 à 8% du mélange total, alors que le reste de la matière grasse provient de l'huile hydrogénée et non hydrogénée (a).

17. Procédé de production d'un mélange gras ayant une tendance réduite à la pulvérulence, comprenant le mélange d'une huile (a) ayant un niveau de résidue acide linoléique d'au moins 20% avec un mélange de triglycérides obtenu soit

(i) par interestérification d'un mélange d'huile (a) avec une matière grasse (d) choisie dans le groupe constitué par l'huile de palme, l'huile de coton, la graisse de beurre, la graisse de suif, l'huile de hereng, l'huile de menhaden et leurs fractions, sous forme hydrogénée ou non hydrogénée, suivie de l'hydrogénation du mélange interestérifié jusqu'à un point de fusion de 30 à 48°C, ou

(ii) par interestérification d'un mélange d'une huile (c) ayant un point de fusion de 30 à 48°C avec la matière grasse (d), la concentration en matière grasse (d) constituant 1 à 15% du mélange gras total.

18. Procédé selon la revendication 17, dans lequel la matière grasse (c) est constituée par une huile qui a été hydrogénée dans des conditions favorisant l'isomérisation.

19. Procédé selon la revendication 18, comprenant l'utilisation d'une huile (c) constituée par de l'huile de tournesol, de l'huile de carthame, de l'huile de soja, de l'huile de maïs, de l'huile de colza ou un de leurs mélanges, qui a été hydrogénée jusqu'à un point de fusion de 30 à 48°C, à une température de 140 à 180°C, en utilisant un catalyseur au nickel empoisonné par du soufre.

20. Procédé selon la revendication 17, comprenant l'utilisation d'une proportion de matière grasse (d) telle que le niveau de résidus acide palmitique dans le mélange interestérifié soit d'au moins 10%.

21. Procédé selon la revendication 20, dans lequel on utilise une matière grasse (d) ayant un niveau de résidus acide palmitique de 50 à 90%.

22. Procédé selon la revendication 21, dans lequel la matière grasse (d) est obtenue par fractionnement de l'huile de palme en présence d'acétone de 18 à 24°C et isolement de la fraction stéarine.

23. Margarines, contenant une matière grasse pour margarine selon l'une quelconque des revendications 1 à 16 précédentes.

**Revendications pour l'Etat Contractant: AT**

1. Procédé de production d'un mélange gras pour margarine ayant une tendance réduite à la pulvérulence, comprenant le mélange d'une huile (a) ayant un niveau de résidus acide linoléique d'au moins 20% avec une matière grasse hydrogénée (b) contenant des acides gras trans-insaturés ayant un niveau de résidus acide palmitique d'au moins 10%, (b) étant obtenu soit

(i) par interestérification d'un mélange d'une huile (a) avec une matière grasse (d) choisie dans le groupe constitué par l'huile de palme, l'huile de coton, la graisse de beurre, la graisse de suif, l'huile de hereng, l'huile de menhaden et leurs fractions sous forme hydrogénée ou non hydrogénée, suivie de l'hydrogénation du mélange interestérifié jusqu'à un point de fusion de 30 à 48°C, ou

(ii) par interestérification d'un mélange d'une huile (c) ayant un point de fusion de 30 à 48°C avec la matière grasse (d), la concentration en matière grasse (d) constituant 1 à 15% du mélange gras total.

10

2. Procédé selon la revendication 1, dans lequel l'huile (a) constitue 30 à 75% et la matière grasse (b) constitue 25 à 70% du mélange gras total.

3. Procédé selon la revendication 1, dans lequel le rapport (a):(d) ou le rapport (c):(d) est compris entre 5:1 et 20:1.

4. Procédé selon la revendication 3, dans lequel le rapport (a):(d) ou le rapport (c):(d) est compris entre 7:1 et 14:1.

5. Procédé selon la revendication 1, dans lequel l'huile (a) comprend de l'huile de tournesol, de l'huile de carthame, de l'huile de soja, de l'huile de maïs, de l'huile de colza ou leurs mélanges.

6. Procédé selon la revendication 1, dans lequel la matière grasse (c) comprend de l'huile de tournesol, de l'huile de carthame, de l'huile de soja, de l'huile de maïs, de l'huile de colza ou leurs mélanges, hydrogénée jusqu'à un point de fusion de 30 à 48°C, dans des conditions favorisant l'isomérisation.

7. Procédé selon la revendication 6, dans lequel la matière grasse (c) est constituée par de l'huile de tournesol hydrogénée jusqu'à un point de fusion de 34 à 43°C et la matière grasse (a) est constituée par de l'huile de tournesol.

8. Procédé selon la revendication 6, dans lequel le niveau d'acides gras trans est de 15 à 30%.

9. Procédé selon la revendication 1, dans lequel le niveau des résidus acide linoléique est de 30 à 55%.

10. Procédé selon la revendication 9, dans lequel le niveau de résidus acide linoléique est de 40 à 48%.

11. Procédé selon la revendication 1, dans lequel la matière grasse (d) a un niveau de résidus acide palmitique de 50 à 90%.

12. Procédé selon la revendication 11, dans lequel la matière grasse (d) est la fraction stéarine obtenue par fractionnement de l'huile de palme.

13. Procédé selon la revendication 12, dans lequel la fraction stéarine de l'huile de palme a été obtenue par fractionnement de l'huile de palme en présence d'un solvant.

14. Procédé selon la revendication 13, dans lequel la fraction stéarine de l'huile de palme est une fraction obtenue par fractionnement en présence d'acétone à une température de 18 à 24°C.

15. Procédé selon la revendication 1, dans lequel l'huile (a) est présente en proportion de 60 à 75% et la matière grasse (b) est présente en proportion de 25 à 40%.

16. Procédé selon la revendication 1, dans lequel la matière grasse (d) constitue 2 à 8% du mélange total, alors que le reste de la matière grasse provient de l'huile hydrogénée et non hydrogénée (a).

17. Procédé selon la revendication 1, dans lequel on utilise une huile (c) constituée par de l'huile de tournesol, de l'huile de carthame, de l'huile de soja, de l'huile de maïs, de l'huile de colza ou un de leurs mélanges, ayant été hydrogénée jusqu'à un point de fusion de 30 à 48°C, à une température de 140 à 180°C, en utilisant un catalyseur au nickel empoisonné par du soufre.

18. Procédé selon la revendication 1, dans lequel la matière grasse (d) est obtenue par fractionnement de l'huile de palme en présence d'acétone de 18 à 24°C et isolement de la fraction stéarine.

19. Procédé de production d'une margarine, dans lequel on utilise dans la phase graisseuse une matière grasse pour margarine produite selon l'une quelconque des revendications 1 à 18 précédentes.